# FASCICULE DE BREVET EUROPEEN

(11) **EP 3 717 575 B1**
(45) Date de publication et mention de la délivrance du brevet: **21.08.2024**
(21) Numéro de dépôt: 18807357.1
(22) Date de dépôt: 28.11.2018
(51) Int. Cl.: C09D 5/08

(54) **LIANTS DESHYDRATES, SOUS FORME SOLIDE, LEUR PROCEDE D'OBTENTION ET LEUR PROCEDE DE REHYDRATATION**
DEHYDRIERTE BINDEMITTEL IN FESTER FORM, HERSTELLUNGSVERFAHREN DAFÜR UND VERFAHREN ZUR REHYDRIERUNG DAVON
DEHYDRATED BINDERS IN SOLID FORM, PRODUCTION METHOD THEREOF, AND METHOD FOR REHYDRATING SAME

(30) Priorité: 28.11.2017 FR 1761267
(43) Date de publication de la demande: 07.10.2020
(73) Titulaire: NOF Metal Coatings Europe, 60100 Creil (FR)
(72) Inventeur: POULET, Jean-Marie, 60300 Senlis (FR); LABOUCHE, Didier, 59230 Saint Amand les Eaux (FR); BRUYERE, Stéphanie, 60340 Villers sous Saint-Leu (FR)
(74) Mandataire: AtlantIP International
(86) Numéro de dépôt international: PCT/EP2018/082884
(87) Numéro de publication internationale: WO 2019/106037

(56) Documents cités:
- WO-A1-2005/078026
- CN-A- 102 911 543

## Description

La présente invention concerne des liants déshydratés, sous forme solide, leur procédé d'obtention et leur réhydratation pour la préparation d'une composition aqueuse comprenant un liant.

On connait des liants qui sont notamment utilisés pour la préparation de compositions aqueuses destinées à la préparation de revêtements anti-corrosion.

Ainsi, la Demanderesse a décrit dans sa demande WO2005/078026 une composition de revêtement anti-corrosion de pièces métalliques à base de métal particulaire en dispersion aqueuse comprenant un titanate ou un zirconate organique compatible en phase aqueuse ou en phase organique, éventuellement un liant à base de silane, et de l'eau. Cette composition n'est pas une composition réhydratable à l'eau.

L'invention propose maintenant des liants déshydratés qui permettent notamment de réduire le volume de stockage et d'améliorer la durée de vie du liant sol-gel.

L'invention a pour premier objet une composition solide, réhydratable à l'eau destinée à la préparation d'une composition aqueuse comprenant un liant à base de silane et de titanate et/ou de zirconate, ladite composition solide étant à base d'un précurseur de titanate et/ou d'un précurseur de zirconate et d'un silane portant au moins une fonction hydrolysable en fonction hydroxyle avec un ratio molaire (Ti+Zr)/Si allant de 10/90 à 60/40, ladite composition étant sous une forme pulvérulente, la taille des particules variant d'environ 2µm à environ 3 mm.

De manière surprenante, il a été constaté que l'une des conditions essentielles à la réhydratation de la composition solide est qu'elle soit à base d'un précurseur de titanate Ti et/ou de zirconate Zr. Avantageusement, la composition solide est à base d'un précurseur de titanate Ti.

Par « précurseur », on entend, au sens de la présente invention, un réactif chimique qui permet d'amorcer une réaction. Il s'agit souvent d'un alcoolate (alcoxyde de formule M(OR)n : où M est un métal, par exemple Ti, Zr ou Si, et R un groupe organique alkyle CnHn-1) ou bien un sel métallique.

Par « précurseur de titanate », on entend, au sens de la présente invention, un composé comprenant au moins un atome de titane et apte à former des liaisons covalentes, entre elles ou avec les autres précurseurs, incluant les précurseurs de silicium que sont le silane et le silicate, pour former un liant.

Par « précurseur de zirconate », on entend, au sens de la présente invention, un composé comprenant au moins un atome de zirconium et apte à former des liaisons covalentes, entre elles ou avec les autres précurseurs, incluant les précurseurs de silicium que sont le silane et le silicate, pour former un liant.

Par « silane », on entend, au sens de la présente invention, un composé organique comprenant au moins un atome de Si avec au moins une liaison Si-C. Dans un silane, les liaisons avec l'atome de silicium, outre la liaison Si-C, sont généralement des liaisons Si-O, Si-Si ou Si-H, plus avantageusement Si-O.

Par « silicate », on entend, au sens de la présente invention, un composé organique ou inorganique, avantageusement organique, comprenant au moins un atome de Si sans liaison Si-C. Dans un silicate, les liaisons avec l'atome de silicium sont généralement des liaisons Si-O, Si-Si ou Si-H, plus avantageusement Si-O.

Par « taille de particule », on entend, au sens de la présente invention, la dimension maximale de la particule considérée.

Par « composition à base de » on entend, au sens de la présente invention, une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Par « composition solide » on entend, au sens de la présente invention, une composition sous la forme d'un gel dur ou sous une forme pulvérulente. Dans un mode de réalisation particulier, la composition solide est obtenue par déshydratation d'une composition aqueuse. La composition solide est réhydratable à l'eau et peut notamment servir à la préparation d'une composition de revêtement anti-corrosion de pièces métalliques à base de métal particulaire en dispersion aqueuse.

Par « composition aqueuse » on entend, au sens de la présente invention, une composition aqueuse à base d'un précurseur de titanate et/ou d'un précurseur de zirconate et d'un silane portant au moins une fonction hydrolysable en fonction hydroxyle selon l'invention, qui est destinée à être déshydratée pour donner la composition solide selon l'invention.

Par « composition de revêtement » on entend, au sens de la présente invention, une composition en dispersion aqueuse, destinée à être appliquée sur un substrat, en particulier métallique, puis soumise à une opération de cuisson afin de donner le revêtement. La composition de revêtement consiste en la composition solide réhydratée, éventuellement un métal particulaire et éventuellement d'autres composés étant ajoutés à cette composition.

Au sens de la présente invention, le « revêtement » est donc obtenu par application de la composition de revêtement sur un substrat, en particulier métallique, la couche de revêtement étant ensuite soumise à une opération de cuisson. Les termes «revêtement », « revêtement anti-corrosion » et « film sec de revêtement » sont utilisés dans la présente demande de manière synonyme.

Par « taux d'extrait sec », on entend au sens de la présente invention, le taux du résidu obtenu par évaporation des solvants et des matières volatiles contenues dans la composition aqueuse initiale ou la composition de revêtement initiale ; l'évaporation étant avantageusement effectuée dans une étuve pendant 1h à 180 °C. Le taux d'extrait sec est exprimé en pourcentage en poids par rapport au poids total de la composition aqueuse initiale ou de la composition de revêtement initiale.

Le ratio molaire (Ti+Zr)/Si varie avantageusement de 10/90 à 60/40, plus avantageusement de 20/80 à 50/50, encore plus avantageusement de 25/75 à 50/50.

La source de silicium est le silane, mais peut également être en partie un silicate. Lorsqu'un silicate est également présent, le silane est néanmoins majoritaire en mole.

La source de Ti est avantageusement un titanate organique. La source de Zr est avantageusement un zirconate organique.

Lorsque la composition ne comprend pas de zirconate, le ratio molaire Ti/Si varie avantageusement de 10/90 à 60/40, plus avantageusement de 20/80 à 50/50, encore plus avantageusement de 25/75 à 50/50.

Le précurseur de titanate est avantageusement un titanate organique.

Dans un premier mode de réalisation, préféré, le titanate organique est choisi parmi les tétraalkyle en C₁-C₁₀ titanates, avantageusement les tétraalkyle en C₁-C₈ titanates. Ils peuvent être représentés par la formule (I) suivante : 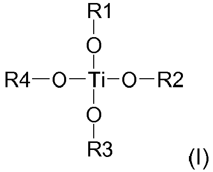 dans laquelle R1, R2, R3 et R4 représentent indépendamment un radical alkyle en C₁-C₁₀, avantageusement en C₁-C₈, éventuellement substitué. Le tétraalkyle en C₁-C₁₀ titanate avantageusement le tétraalkyle en C₁-C₈ titanate est avantageusement choisi dans le groupe constitué par le tétraéthyltitanate (TET, Ti(OC₂H₅)₄), le tétra-n-butyltitanate (TₙBT, Ti(OC₄H₉)₄), le tetra-isopropoxytitanate (Ti(OCH(CH₃)₂)₄), le tétra-n-propoxytitanate (Ti(OCH₂CH₂CH₃)₄) et l'octylèneglycoltitanate (OGT, TI(O₂C₈H₁₇)₄).

Dans un deuxième mode de réalisation, le titanate organique est choisi parmi les titanates organiques sous forme chélatée non compatibles avec l'eau (compatibles en phase organique), on peut notamment citer l'acétylacétonate titanium et le diisopropoxy-biséthylacétoacétato titanate, commercialisés par Dort Ketal sous les noms TYZOR^{®} AA (acétylacétonate titanium), et TYZOR^{®} DC (diisopropoxy-biséthylacétoacétato titanate).

Dans un troisième mode de réalisation, le titanate organique est choisi parmi les titanates chélatés compatibles en phase aqueuse, qui peuvent avantageusement être représentés par la formule générale (II) suivante : 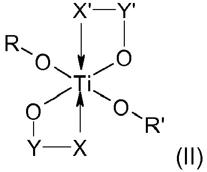 dans laquelle R et R' représentent indépendamment l'un de l'autre un radical alkyle en C₁-C₁₀, avantageusement en C₁-C₈, éventuellement substitué, X et X' représentent indépendamment un groupe fonctionnel comprenant un atome d'oxygène ou d'azote, et Y et Y' représentent indépendamment une chaîne hydrocarbonée ayant 1 à 4 atomes de carbone. X et X' représentent avantageusement un radical amino ou lactate.

Le titanate organique sous forme chélatée compatible en phase aqueuse est avantageusement choisi dans le groupe constitué par les triéthanolamines titanates (TYZOR^{©} TE et TEP commercialisés par Dort Ketal). Comme exemple de titanates organiques sous forme chélatée compatibles en phase aqueuse, on peut également citer l'alcanolamine titanate sous forme chélatée et le chélate de titanate et d'acide lactique, commercialisés par Dorf Ketal sous les noms TYZOR^{®} TA (alcanolamine titanate sous forme chélatée) et TYZOR^{®} LA (chélate de titanate et d'acide lactique).

Le précurseur de zirconate est avantageusement un zirconate organique.

Dans un premier mode de réalisation, préféré, le zirconate organique est choisi parmi les tétraalkyle en C₁-C₁₀ zirconates, avantageusement les tétraalkyle en C₁-C₈ zirconates, qui peuvent avantageusement être représentés par la formule (III) suivante : 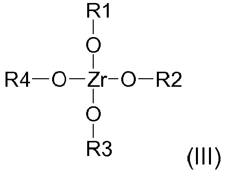 dans laquelle R1, R2, R3 et R4 représentent indépendamment un radical alkyle en C₁-C₁₀, avantageusement en C₁-C₈, éventuellement substitué. Le tétraalkyle en C₁-C₁₀ zirconate, avantageusement le tétraalkyle en C₁-C₈ zirconate, est avantageusement choisi dans le groupe constitué par le tétra-n-propyl zirconate et le tétra-n-butyl zirconate.

Dans un deuxième mode de réalisation, le zirconate organique est choisi parmi les zirconates organiques sous forme chélatée non compatibles avec l'eau (compatibles en phase organique), on peut notamment citer le diéthylcitrate zirconate chélaté commercialisé par Dorf Ketal sous le nom TYZOR^{®} ZEC.

Dans un troisième mode de réalisation, le zirconate organique est choisi parmi les zirconates chélatés compatibles en phase aqueuse, qui peuvent avantageusement être représentés par la formule générale (IV) suivante : 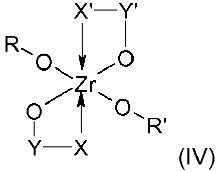 dans laquelle R et R' représentent indépendamment l'un de l'autre un radical alkyle en C₁-C₁₀, avantageusement en C₁-C₈, éventuellement substitué, X et X' représentent indépendamment un groupe fonctionnel comprenant un atome d'oxygène ou d'azote, et Y et Y' représentent indépendamment une chaîne hydrocarbonée ayant 1 à 4 atomes de carbone. X et X' représentent avantageusement un radical amino.

Le zirconate organique chelaté peut avantageusement être le triéthanolamine zirconate (TYZOR^{®} TEAZ commercialisé par Dort Ketal). Comme exemple de zirconate organique sous forme chélatée compatible en phase aqueuse, on peut également citer le chélate de zirconate et d'acide lactique commercialisé par Dort Ketal sous le nom TYZOR^{®} LAZ.

Le précurseur de titanate est avantageusement un titanate organique, plus avantageusement choisi parmi les tétraalkyle en C₁-C₈ titanates, et le précurseur de zirconate est avantageusement un zirconate organique, plus avantageusement choisi parmi les tétraalkyle en C₁-C₈ zirconates.

Le silane porte au moins une fonction hydrolysable en fonction hydroxyle, avantageusement choisie parmi un radical alcoxy en C₁-C₄, de préférence en C₁-C₂.

On entend par « fonction hydrolysable en fonction hydroxyle », toute fonction chimique susceptible de réagir avec l'eau pour se transformer en fonction hydroxyle-OH.

Le silane porte avantageusement trois fonctions hydrolysables en fonction hydroxyle, de préférence identiques.

Le silane porte au moins un, avantageusement un, radical hydrocarboné, relié à l'atome de silicium par un de ses atomes de carbone. Ce radical hydrocarboné peut également comprendre des hétéroatomes ou des halogènes, avantageusement des hétéroatomes. Ce radical hydrocarboné peut être linéaire, ramifié voire comprendre un cycle. Ce radical hydrocarboné peut avantageusement comprendre jusqu'à 10 atomes de carbone, plus avantageusement de 4 à 10 atomes de carbone.

Dans une variante préférée, le silane porte en outre une fonction époxy (oxirane), qui favorise la réticulation et l'adhésion au substrat. Ainsi, le radical hydrocarboné comprend avantageusement une fonction époxy.

Le silane est avantageusement aisément dispersé dans le milieu aqueux et est, de préférence, soluble dans un tel milieu.
Le silane utilisé est avantageusement un silane à fonction époxy choisi parmi le di- ou triméthoxysilane à fonction époxy et le di- ou triéthoxysilane à fonction époxy, ainsi que leurs mélanges, en particulier comme le bêta-(3,4-époxycyclohexyl)éthyl-triméthoxysilane, le 4-(triméthoxysilyl)butane-1,2-époxyde ou le gamma-glycidoxypropyltriméthoxysilane ou le gamma glycidoxypropyltriéthoxysilane. Le silane utilisé peut également être avantageusement l'octyltriethoxysilane, le phenyltriethoxysilane, le methyltriethoxysilane, (2-diethylphosphatoethyl) triethoxy silane, le vinyltriethoxysilane, le 3-Aminopropyltriethoxysilane, le methylmethacrylate trimethoxysilane, le méthylmethacrylate triethoxysilane et leurs mélanges.

La composition solide peut en outre comprendre un silicate. Ce silicate est également source de Si. Le silicate est avantageusement un alcoxyde de silicium, en particulier l'orthosilicate de tétraéthyle (Si(OC₂H₅)₄ et dit « TEOS »).

La composition solide selon l'invention est avantageusement obtenue par déshydratation d'une composition aqueuse dans laquelle on a introduit ledit précurseur de titanate et/ou ledit précurseur de zirconate, ledit silane, éventuellement ledit silicate, et de l'eau.

La déshydratation peut être conduite par tout moyen connu de l'homme de l'art tel que par exemple la lyophilisation, la zéodratation, l'atomisation ou l'évaporation sous vide. Avantageusement la composition solide est obtenue selon le procédé décrit plus loin.

Par « composition aqueuse », on entend, au sens de la présente invention une composition comprenant comme solvant majoritaire, en poids, de l'eau.

Dans la présente invention, ladite composition aqueuse comprend avantageusement au moins 25% en poids, par rapport au poids total de ladite composition aqueuse, d'eau, plus avantageusement au moins 32% en poids d'eau.

La composition aqueuse est à base avantageusement de 20 à 40 % en poids, plus avantageusement de 20 à 34 % en poids, par rapport au poids total de la composition aqueuse, dudit silane. Cette quantité correspond à la quantité introduite dudit silane lors de la préparation de la composition aqueuse. Une fois que tous les composés de la composition aqueuse ont été introduits, ils peuvent/vont réagir entre eux pour former de nouveaux composés, on parlera alors en quantité d'éléments Si.

La composition aqueuse est à base avantageusement de 0 à 5% en poids, plus avantageusement de 0 à 3,5% en poids, par rapport au poids total de la composition aqueuse, dudit silicate. Cette quantité correspond également à la quantité introduite dudit silicate lors de la préparation de la composition aqueuse.

Ainsi, dans la composition solide selon l'invention, la teneur en élément Si (masse atomique = 28 g/mol) est avantageusement comprise entre 5 et 15%, avantageusement entre 6 et 11 % en poids par rapport au poids total de la composition solide.

La composition aqueuse est à base avantageusement de 2 à 55% en poids, plus avantageusement de 9 à 25% en poids, par rapport au poids total de la composition aqueuse, dudit précurseur de titanate, dudit précurseur de zirconate ou de leur mélange. Cette quantité correspond à la quantité introduite dudit précurseur de titanate, dudit précurseur de zirconate ou de leur mélange lors de la préparation de la composition aqueuse. Une fois que tous les composés de la composition aqueuse ont été introduits, ils peuvent/vont réagir entre eux pour former de nouveaux composés, on parlera alors en quantité d'éléments Ti et/ou d'éléments Zr.

Ainsi, dans la composition solide selon l'invention, la teneur en élément Ti (masse atomique = 48) et/ou en élément Zr (masse atomique = 91 g/mol) est avantageusement comprise entre 1,5 et 35 %, avantageusement entre 2,5 et 30 % en poids par rapport au poids total de la composition solide. Dans une variante avantageuse, la composition solide ne comprend pas de précurseur de zirconate et la teneur en élément Ti (masse atome = 48 g/mol) est avantageusement comprise entre 1,5 et 16%, avantageusement entre 2,5 et 15 % en poids par rapport au poids total de la composition solide.

Il a été découvert que la composition solide était par la suite plus facilement réhydratable lorsque la composition aqueuse initiale comprenait également un solvant organique lourd, un liquide ionique, ou leurs mélanges.

Ainsi, dans un mode de réalisation avantageux de l'invention la composition solide est obtenue par déshydratation de la composition aqueuse décrite précédemment comprenant en outre un solvant organique lourd, un solvant ionique, ou leurs mélanges. En particulier, ladite composition aqueuse comprend de 0,5 à 15% en poids, par rapport au poids total de ladite composition aqueuse, de solvant organique lourd, de liquide ionique, ou de leurs mélanges. On entend par « solvant organique lourd » dans le cadre de la présente invention, un solvant organique miscible dans l'eau, dont la tension de vapeur à 20°C est de préférence inférieure à 4 mmHG, avantageusement inférieure à 2 mmHG.

A titre de solvant organique lourd, on peut notamment utiliser les solvants glycoliques tels que les éthers de glycol, en particulier le diéthylène-glycol, le triéthylène-glycol et le dipropylène-glycol, les acétates, le propylène-glycol, le polypropylène-glycol, les alcools, les cétones, l'éther méthylique de propylène glycol, l'isobutyrate de triméthyl-2,2,4 pentanediol (1,3) (texanol), le white spirit ainsi que leurs mélanges.

Le dipropylène-glycol est particulièrement avantageux, notamment pour des raisons économiques et de protection de l'environnement.

A titre de solvant organique lourd, on peut également utiliser les esters, tels que le lactate d'éthyle, l'oléate de méthyle ou les méthyl- ou éthyl- esters d'acides gras.
Les liquides ioniques sont des sels possédant une température de fusion inférieure à 100 °C tels que décrit dans l'ouvrage « Electrodeposition from lonic Liquids » edited by Frank Endres, Douglas MacFarlane,and Andrew Abbott , et, dans le cadre de la présente invention, inférieures à la température ambiante. Les cations sont généralement de type dialkylimidazolium, tétraalkylammonium, tétraalkylephosphonium ou alkylpyridium. Les anions sont généralement de type tétrafluoroborate, hexafluorophosphate, halogénure, mésylate, tosylate, triflate ou acétate.

La composition solide selon l'invention peut ensuite être réhydratée, sans difficulté, avantageusement sous agitation, pour donner une composition aqueuse comprenant un liant silane / (titanate et/ou zirconate). Ce liant silane / (titanate et/ou zirconate) peut par la suite par exemple être utilisé pour la préparation d'une composition de revêtement.

D'une manière surprenante, il a été constaté qu'une composition solide à base d'un précurseur de silicium et d'un précurseur de titanate pouvait facilement être réhydratée alors qu'une composition solide à base uniquement d'un précurseur de silicium ne pouvait pas être réhydratée.

La réhydratation est conduite par ajout d'eau, avantageusement sous agitation. En plus de l'eau, on peut également ajouter un solvant organique lourd ou un liquide ionique, dans des proportions massiques correspondant à celles décrites précédemment pour la composition aqueuse initiale, avantageusement en une quantité inférieure ou égale à 15% en poids, allant ainsi de 0% à 15% en poids, par rapport au poids total du mélange eau + (solvant organique lourd, liquide ionique et leurs mélanges). La quantité d'eau, et éventuellement de solvant organique lourd ou liquide ionique, ajoutée correspond généralement à la quantité de liquide qui était présente dans la composition aqueuse initiale, afin d'atteindre le même taux d'extrait sec. Dans un autre mode de réalisation, la quantité d'eau, et éventuellement de solvant organique lourd ou liquide ionique, ajoutée peut être plus élevée que la quantité de liquide qui était présente dans la composition aqueuse initiale pour augmenter la stabilité après réhydratation. Ainsi, la composition aqueuse initiale peut être plus concentrée pour augmenter la productivité lors de la déshydratation et être réhydratée à un extrait sec plus bas pour obtenir une bonne stabilité de la composition finale.

Le taux d'extrait sec visé varie avantageusement de 10 à 35%, plus avantageusement de 20 à 25%.

La composition aqueuse réhydratée est stable, au moins aussi stable que la composition aqueuse initiale, voire plus stable.

La présente invention a également pour objet un procédé de préparation d'une composition solide selon l'invention, comprenant une étape de déshydratation d'une composition aqueuse à base dudit précurseur de titanate et/ou dudit précurseur de zirconate, dudit silane, éventuellement dudit silicate, et d'eau, telle que définie précédemment.

Dans un premier mode de réalisation, la déshydratation est conduite par lyophilisation.

La lyophilisation est une méthode particulièrement bien connue de dessication sous vide, à basse température, de produits liquides préalablement congelés. La lyophilisation consiste en l'élimination progressive de l'eau du produit préalablement congelé par sublimation.

Dans ce premier mode de réalisation, le procédé comprend une étape de congélation de ladite composition aqueuse puis une étape de lyophilisation.

Ladite composition aqueuse peut par exemple être congelée par l'emploi d'azote liquide.

La lyophilisation est avantageusement conduite à une température allant de -70°C à -90°C, avantageusement -80°C, et à une pression comprise entre 0,05 mBar et 0,3 mBar, avantageusement entre 0,1 mBar et 0,26 mBar.

Dans un deuxième mode de réalisation, la déshydratation est conduite par zéodratation.

Le procédé de zéodratation est une méthode de dessication sous vide en présence d'un lit de zéolithe. Elle ne nécessite pas d'étape de congélation.

Dans un troisième mode de réalisation, la déshydratation est conduite par évaporation sous vide, avantageusement à une température proche de la température ambiante.

Le procédé d'évaporation sous vide est une méthode très connue permettant d'évaporer l'eau à une température significativement inférieure à la température standard d'ébullition.

Dans le cadre de la présente invention, l'évaporation sous vide est avantageusement conduite à une température inférieure à 60°C, plus avantageusement allant de 35°C à 50°C. Le vide peut par exemple être obtenu avec une pression allant de 15 mBar à 25 mBar.

Alternativement, la déshydratation peut se faire par atomisation. L'atomisation est une méthode de déshydratation d'un liquide sous forme de poudre par passage dans un flux d'air chaud. Avantageusement, dans le cadre de la présente invention, les paramètres de l'atomisation sont déterminés pour obtenir une température de poudre inférieure à 60°C, plus avantageusement allant de 35°C à 50°C.
Suite à l'obtention de la composition solide, par déshydratation selon une méthode adaptée, en particulier une des quatre méthodes décrites précédemment, le procédé peut comprendre une étape de réduction de la taille des particules de poudre, par exemple par le biais d'une action mécanique.

Cette action optionnelle sur les particules solides obtenues peut être mise en oeuvre pour ajuster la finesse de la poudre recherchée. Cette étape affectera la densité apparente de la poudre obtenue et pourra accélérer l'étape ultérieure de réhydratation.

Selon un autre mode de réalisation, suite à l'obtention de la composition solide, par déshydratation selon une méthode adaptée, notamment par atomisation, le procédé peut comprendre une étape de granulation permettant d'augmenter la taille des particules de poudre. Cette étape affectera également la densité apparente de la poudre obtenue et pourra accélérer l'étape ultérieure de réhydratation.

La préparation d'une composition solide, facilement réhydratable, permet notamment de réduire les volumes de stockage. Elle permet également d'augmenter la durée de vie du liant silane / (titanate et/ou zirconate) puisque la composition solide est sensiblement moins sensible à une dégradation qu'une composition aqueuse et qu'après hydratation, la composition aqueuse obtenue est au moins aussi stable que la composition aqueuse qui n'a pas été soumise au procédé selon l'invention.

L'invention a également pour objet un procédé de préparation d'une composition aqueuse comprenant un liant à base de silane et de titanate et/ou de zirconate comprenant une étape d'hydratation d'une composition solide selon l'invention ou obtenue par le procédé selon l'invention.

L'hydratation, plus précisément la réhydratation, est conduite par ajout d'eau, avantageusement sous agitation. En plus de l'eau, on peut également ajouter un solvant organique lourd ou un liquide ionique, dans des proportions massiques correspondant à celles décrites précédemment pour la composition aqueuse initiale, avantageusement en une quantité inférieure ou égale à 15% en poids, allant ainsi de 0% à 15% en poids, par rapport au poids total du mélange eau + (solvant organique lourd, liquide ionique et leurs mélanges). La quantité d'eau, et éventuellement de solvant organique lourd ou liquide ionique, ajoutée correspond généralement à la quantité de liquide qui était présente dans la composition aqueuse initiale, afin d'atteindre le même taux d'extrait sec. Selon un autre mode de réalisation de l'invention, la composition aqueuse initiale peut être plus concentrée pour augmenter la productivité lors de la déshydratation et être réhydratée à un extrait sec plus bas pour obtenir une bonne stabilité de la composition finale.

Le taux d'extrait sec visé varie avantageusement de 10 à 35%, plus avantageusement de 20 à 25%.

La composition aqueuse réhydratée est stable, au moins aussi stable que la composition aqueuse initiale, voire plus stable.

La composition aqueuse réhydratée comprenant le liant à base de silane et de titanate et/ou de zirconate est particulièrement adaptée pour la préparation d'une composition de revêtement anti-corrosion de pièces métalliques à base de métal particulaire en dispersion aqueuse telle que décrite dans la demande WO2005/078026.

En particulier, une telle composition de revêtement comprend un métal particulaire.

Le métal particulaire de la composition de revêtement peut être choisi dans le groupe constitué par les pigments métalliques tels que l'aluminium, le manganèse, le nickel, le titane, l'acier inoxydable, le zinc, leurs alliages, ainsi que leurs mélanges. Le métal particulaire est avantageusement choisi parmi le zinc et l'aluminium, ainsi que leurs alliages et leurs mélanges ou leurs alliages avec le manganèse, le magnésium, l'étain ou le Galfan. Le métal particulaire présent dans la composition est avantageusement sous forme de poudre, de différentes structures géométriques homogènes ou hétérogènes, notamment les formes sphériques, lamellaires, lenticulaires ou d'autres formes spécifiques. Le métal particulaire a avantageusement une granulométrie inférieure à 100 µm, encore plus avantageusement inférieure à 40 µm.

Lorsque le métal particulaire est un alliage ou un mélange de zinc et d'aluminium, l'aluminium peut éventuellement être présent en des quantités très faibles, par exemple 1 à 5 % en poids du métal particulaire, tout en fournissant néanmoins un revêtement d'aspect brillant. Habituellement, l'aluminium représente moins de 10 % en poids du métal particulaire, ainsi le rapport pondéral de l'aluminium au zinc est de l'ordre de 0,5:9,5. D'un autre côté, pour des raisons d'économie, l'aluminium ne représente pas plus d'environ 50 % en poids du zinc et de l'aluminium total, si bien que le rapport pondéral de l'aluminium au zinc peut atteindre 1:1. La teneur en métal particulaire de la composition de revêtement ne dépassera pas environ 40 % en poids du poids total de la composition pour maintenir le meilleur aspect de revêtement et représentera habituellement au moins 10 % en poids pour obtenir un aspect de revêtement brillant.

La composition de revêtement comprend avantageusement de 10 à 40% en poids, par rapport au poids total de la composition de revêtement, dudit métal particulaire.

Cette composition de revêtement est en particulier adaptée à la préparation d'un revêtement anticorrosion pour pièces métalliques. Le revêtement est obtenu par application de la composition de revêtement sur un substrat, en particulier métallique, avantageusement par pulvérisation, trempage-égouttage ou trempage-centrifugation, la couche de revêtement étant ensuite soumise à une opération de cuisson conduite de préférence à une température comprise entre 120°C et 350°C, pendant environ 10 à 60 minutes, par apport d'énergie thermique, telle que par convection ou infra-rouge, ou pendant environ 30 secondes à 5 minutes par induction.

En particulier, le revêtement anti-corrosion résultera d'une opération d'application impliquant, préalablement à une opération de cuisson, une opération de séchage des pièces, avantageusement métalliques, revêtues, par apport d'énergie thermique, telle que par convection, infra-rouge ou induction, à une température comprise entre 30 et 250°C, avantageusement de l'ordre de 70°C, en convection ou en infra-rouge pendant 10 à 30 minutes sur ligne ou pendant environ 30 secondes à 5 minutes par induction. Avant le revêtement, il est judicieux dans la plupart des cas d'éliminer la matière étrangère de la surface du substrat, notamment par nettoyage et dégraissage soigneux. Dans ces conditions, l'épaisseur du film sec de revêtement ainsi appliqué est avantageusement comprise entre 3 µm (11 g/m²) et 30 µm (110 g/m²) et de préférence entre 4 µm (15 g/m²) et 12 µm (45 g/m²), plus particulièrement entre 5 µm (18 g/m²) et 10 µm (40 g/m²).

Le substrat est avantageusement métallique, de préférence en acier ou en acier revêtu de zinc ou d'une couche à base de zinc déposés par différents modes d'application incluant le dépôt mécanique, à la fonte et l'aluminium.

Le substrat métallique peut être traité au préalable, par exemple par un traitement au chromate ou au phosphate. Ainsi, le substrat peut être prétraité pour avoir, par exemple, un revêtement de phosphate de fer selon une quantité de 0,1 à 1 g/m² ou un revêtement de phosphate de zinc selon une quantité de 1,5 à 4 g/m².

### EXEMPLES

Les exemples ci-après montrent des manières selon lesquelles la présente invention peut être mise en oeuvre, mais ne limitent en aucune façon la présente invention.

### GPC (Chromatographie en phase gel)

Les conditions d'analyse sont les suivantes :
Eluant = eau - Débit = 0.8ml/min - Dilution = 1 qsp 60 - injection = 100µL - Détecteur :
Indice de Réfraction à 35°C - Colonnes de type TSK Gel thermostatées à 40°C : 1 pré-colonne + 2 colonnes G2500PWXL + 1 colonne G3000 PWXL + 1 colonne G4000 PWXL.

### Viscosité

Mesure d'un temps d'écoulement à la coupe consistométrique de type DIN 4.

### Préparation des panneaux d'essai :

Sauf indication contraire, les panneaux d'essai sont typiquement des panneaux d'acier à faible teneur en carbone, laminés à froid. Ils peuvent être préparés tout d'abord par immersion dans une solution de nettoyage. Ensuite, les panneaux peuvent être frottés avec un tampon de nettoyage puis rincés à l'eau et de nouveau immergés dans la solution de nettoyage. Après l'élimination de la solution, les panneaux sont rincés avec de l'eau du robinet et séchés.

### Préparation des vis d'essai :

Les vis sont dégraissées en milieu alcalin à 80°C puis rincées à l'eau et séchées avant d'être grenaillées.

### Application du revêtement aux parties d'essai et poids du revêtement :

Les vis d'essai propres sont revêtues, de façon typique, en les plongeant dans la composition de revêtement, en retirant et en drainant la composition en excès de celle-ci, quelquefois avec une action d'agitation modérée. Les panneaux d'essai propres sont revêtus, de façon typique, par application à la barre de Conway. Les parties d'essai sont ensuite soumises à cuisson immédiate (180°C à 310°C) ou séchage à la température ambiante ou prédurcissement à une température modérée jusqu'à ce que le revêtement soit sec au toucher et ensuite cuit (180°C à 310°C). Les poids de revêtement (g/m²) sont déterminés par pesées comparatives avant et après revêtement.

### Essai de résistance à la corrosion - heures de tenue au brouillard salin :

Les tests de brouillard salin sont menés selon la norme ISO9227 (mai 2012).

Une note à 10 correspond à 0 trace de rouille rouge sur la pièce. Une note à 9 correspond à : 1 à 10 points localisés de rouille rouge.

### Exemple comparatif 1 : Lyophilisation d'une matrice liant sol/gel obtenus à partir de précurseurs à base uniquement de Si

350 ml de liants de différentes compositions, LC1 à LC5, ont été successivement lyophilisés, après congélation préalable dans de l'azote liquide, dans un ballon de 1 litre. L'opération de lyophilisation, effectuée à -80°C et à une pression comprise entre 0,1 mBar et 0,26 mBar, a nécessité 24h pour obtenir un solide ou liquide déshydraté. Les liants LC1 et LC3 ont subi deux lyophilisations successives de 24 heures.

Les compositions LC3 à LC5 ont été soumises à distillation préalablement à la lyophilisation afin d'éliminer par évaporation l'éthanol résiduel et l'azéotrope eau/éthanol issus des réactions des monomères, et de l'eau a ensuite été ajoutée afin d'obtenir la même quantité d'extrait sec final.

Les poudres et liquides visqueux obtenus ont été stockés pendant 1 mois à température ambiante et pression atmosphérique.

La composition des liants LC1 à LC5 est donnée dans le tableau suivant (% massiques introduits* par rapport au poids total initial) :

**Tableau 1**

| | LC1 | LC2 | LC3 | LC4 | LC5 |
|---|---|---|---|---|---|
| Glycidoxypropyltriéthoxysilane | 26 | 26 | 26 | 26 | 26 |
| orthosilicate de tétraéthyle | 6,5 | 6,5 | 6,5 | 6,5 | 6,5 |
| dipropylène-glycol | 0 | 10 | 0 | 5 | 10 |
| eau | 67,5 | 57,5 | 67,5 | 62,5 | 57,5 |
| Etape d'évaporation avant lyophilisation | non | non | oui | oui | oui |
| % massique d'éthanol résiduel avant lyophilisation après réaction des monomères | 19 | 18 | 3 | 2,5 | 2 |

| | | | | | |
|---|---|---|---|---|---|
| **Les teneurs données dans le Tableau 1 sont les teneurs initialement introduites dans le mélange. En effet, certains des constituants introduits peuvent ou vont réagir entre eux, au moins partiellement, lors des différentes phases de fabrication de la composition, ou lors de la cuisson ultérieure, modifiant ainsi la composition telle qu'elle est préparée au départ. Ceci est également valable pour les Tableaux 2, 6 et 8.* | | | | | |

Des essais de réhydratation des liants LC1 et LC3, sans dipropylène-glycol, ont ensuite été tentés sans succès. La poudre de liant Si obtenue n'est pas réhydratable. Dans les liants comprenant du dipropylène-glycol, LC2, LC4 et LC5, un liquide plus ou moins visqueux est obtenu. Celui-ci est diluable à l'eau mais conduit à un polymère instable. En effet, les graphiques de GPC montrent une absence de stabilité des masses moléculaires. Il est à noter que quelque-soit la teneur massique d'éthanol résiduel avant lyophilisation, la lyophilisation est réalisable.

### Exemple 1 : Lyophilisation d'une matrice liant sol/gel obtenus à partir de précurseurs à base de Si et de Ti, enrichie en Ti

350 ml de liants de différentes compositions, LI1 à LI2, ont été successivement lyophilisés, après congélation préalable dans de l'azote liquide, dans un ballon de 1 litre. L'opération de lyophilisation, effectuée à -80°C et à une pression comprise entre 0,1 mBar et 0,26 mBar, a nécessité 24h pour obtenir un solide ultérieurement broyé en poudre fine dont la taille de particules varie environ de 2 µm à quelques mm.

Les compositions LI1 et LI2 ont été soumises à distillation préalablement à la lyophilisation afin d'éliminer par évaporation l'éthanol résiduel et l'azéotrope eau/éthanol issus des réactions des monomères, et de l'eau a ensuite été ajoutée afin d'obtenir la même quantité d'extrait sec final.

Les poudres obtenues ont été stockées pendant 2 à 3 semaines à température ambiante et pression atmosphérique.

La composition des liants LI1 et LI2 est donnée dans le tableau suivant (% massiques introduits par rapport au poids total initial) :

**Tableau 2**

| | LI1 | LI2 |
|---|---|---|
| Glycidoxypropyltriéthoxysilane | 22,2 | 22,2 |
| Tétra-isopropoxytitanate | 22,2 | 22,2 |
| dipropylène-glycol | 0 | 5 |
| Eau | 54,6 | 49,6 |
| Additif | 1 | 1 |

Dans LI1 ou LI2, le ratio molaire Ti/Si est de 50/50. Avant lyophilisation, le taux d'extrait sec est de 22 % en poids.

La poudre issue du liant LI2, dont la composition initiale contient du dipropylène-glycol, a été ensuite facilement réhydratée à une vitesse d'agitation d'environ 300 à 500 tr/min, par ajout d'eau déminéralisée, de manière à obtenir un liquide au même extrait sec en poids que la composition liquide de départ. Le liant ainsi obtenu est dénommé LI'2.

La réhydratation de la poudre issue du liant LI1, dont la composition initiale ne contenait pas de dipropylène-glycol, a été plus longue. Le liant ainsi obtenu est dénommé LI'1. Après réhydratation, les spectres GPC des liants LI'1, LI'2 sont équivalents à ceux des liants LI1, LI2 : les masses moléculaires sont stabilisées.

Des bains ont été réalisés soit avec le liant LI2, soit avec le liant LI'2 (respectivement B2 et B'2), en ajoutant 28,4 % en poids de zinc sec et 1,87 % en poids d'Alu Chromal VIII^{®} poudre commercialisée par Eckart Werke (extrait sec d'AI : 80 % en poids), par rapport au poids total du bain, des additifs, et de l'eau en tant que solvant. Les extraits secs des bains B2 et B'2 sont de 39%.

La stabilité des bains B2 / B'2 après un mois de stockage à 20°C est équivalente, tel que cela ressort du tableau suivant :

**Tableau 3**

| | B2 | B'2 |
|---|---|---|
| Viscosité DIN4 (sec) à 30 jours, 20°C | 35 | 36 |
| pH, à 30 jours, 20°C | 9 | 9 |

Les liants LI2 et LI'2 ont été utilisés pour la préparation de revêtement anticorrosion (film sec), respectivement CR2 et CR'2. La composition de revêtement anticorrosion (film sec) est donnée dans le tableau suivant (% massiques théoriques* par rapport au poids total) :

**Tableau 4**

| | CR2 | CR'2 |
|---|---|---|
| Liant L2 | 19 | 0 |
| Liant L'2 | 0 | 19 |
| Zn | 70,7 | 70,7 |
| AI | 3,7 | 3,7 |
| Additifs | 6,6 | 6,6 |

| | | |
|---|---|---|
| ** les pourcentages massiques donnés dans ce tableau 4 correspondent aux pourcentages massiques calculés en considérant que l'extrait sec du liant est de 22% massique et que seuls les additifs non volatils sont comptés.* | | |

Les performances de tenue au brouillard salin obtenues sont voisines, tel que cela ressort du tableau suivant :

**Tableau 5**

| | CR2 | CR'2 |
|---|---|---|
| épaisseur de revêtement (µm) | 11 | 11,5 |
| Tenue au brouillard salin (heures) à t=0 Note 10/9 | 504/840 | 336/552 |

### Exemple 2 : Lyophilisation d'une matrice liant sol/gel obtenus à partir de précurseurs à base de Si et de Ti, enrichie en Ti

250 ml de liants de différentes compositions, LI3, LI4, LI5 et LI6, ont été successivement lyophilisés, après congélation préalable dans de l'azote liquide, dans un ballon de 1 litre. L'opération de lyophilisation, effectuée à -80°C et à une pression comprise entre 0,1 mBar et 0,26 mBar, a nécessité 24h pour obtenir un solide ultérieurement broyé en poudre fine dont la taille de particules varie environ de 2 µm à quelques mm.

Les compositions LI3 à LI6 ont été soumises à distillation préalablement à la lyophilisation afin d'éliminer par évaporation l'éthanol résiduel et l'azéotrope eau/éthanol issus des réactions des monomères, et de l'eau et 1 à 5% de solvant (DPG/LE/CCU) ont ensuite été ajoutés afin d'obtenir la même quantité d'extrait sec final.

Les poudres obtenues ont été stockées pendant 2 jours à température ambiante et pression atmosphérique.

La composition des liants LI3, LI4, LI5 et LI6 est donnée dans le tableau suivant (% massiques introduites par rapport au poids total initial) :

**Tableau 6**

| | LI3 | LI4 | LI5 | LI6 |
|---|---|---|---|---|
| Glycidoxypropyltriéthoxysilane | 22,2 | 22,2 | 22,2 | 22,2 |
| Tétra-isopropoxytitanate | 22,2 | 22,2 | 22,2 | 22,2 |
| dipropylène-glycol (DPG) | 1 | 3 | 0 | 0 |
| Lactate d'éthyle (LE) | 0 | 0 | 0 | 5 |
| Choline chloride urée (CCU) | 0 | 0 | 5 | 0 |
| Eau | 53,6 | 51,6 | 49,6 | 49,6 |
| Additif | 1 | 1 | 1 | 1 |

Dans LI3 ou LI4 ou LI5 ou LI6, le ratio molaire Ti/Si est de 50/50. Avant lyophilisation, le taux d'extrait sec est de 22 % en poids.

Les poudres issues du liant LI3 ou LI4 ou LI5 ou LI6 ont été ensuite facilement réhydratées à une vitesse d'agitation d'environ 300 à 500 tr/min, par ajout d'eau déminéralisée, de manière à obtenir un liquide au même extrait sec en poids que la composition liquide de départ. Les liants ainsi obtenus sont respectivement dénommés LI'3, LI'4, LI'5, LI'6. Après réhydratation, les spectres GPC des liants LI'3, LI'4, LI'5, LI'6 sont équivalents à ceux des liants LI3, LI4, LI5, LI6 : les masses moléculaires sont stabilisées.

Les liants LI3, LI4, LI5, LI6, LI'3, LI'4, LI'5, LI'6 sont utilisés pour réaliser des bains, de composition identique à celle donnée à l'exemple 1, les liants LI2 ou LI'2 étant remplacés par les liants de cet exemple.

La stabilité des bains après un mois de stockage à 20°C est équivalente, que le liant utilisé soit un liant initial (LI3, LI4, LI5) ou un liant obtenu par le procédé selon l'invention (LI'3, LI'4, LI'5). Les bains réalisés à partir du liant LI6 ne sont pas stables alors qu'ils sont stables lorsque le liant est LI'6

Les liants LI3, LI4, LI'3, LI'4, LI'6 ont été utilisés pour la préparation de revêtement anticorrosion, respectivement CR3, CR4, CR'3, CR'4, CR'6, de composition identique à celle donnée à l'exemple 1, les liants LI2 ou LI'2 étant remplacés par les liants de cet exemple.

Les performances de tenue au brouillard salin obtenues sont au moins équivalentes, tel que cela ressort du tableau suivant :

**Tableau 7**

| | CR3 | CR4 | CR'3 | CR'4 | CR'6 |
|---|---|---|---|---|---|
| épaisseur de revêtement (µm) | 8,7 | 9,3 | 8,1 | 9,9 | 9,5 |
| Tenue au brouillard salin (heures) à t=1 mois, 20°C Note 10/9 | 24/240 | 120/168 | 912/984 | 120/1584 | 1344/1344 |

### Exemple 3 : Lyophilisation d'une matrice liant sol/gel obtenus à partir de précurseurs à base de Si et de Ti

0,8 litre de liant LI7, réparti dans 3 ballons, et 1 litre de liant LI8, réparti dans 4 ballons, ont été successivement lyophilisés, après congélation préalable dans de l'azote liquide, dans un ballon de 1 litre. L'opération de lyophilisation, effectuée à -80°C et à une pression comprise entre 0,1 mBar et 0,26 mBar, a nécessité 24h pour obtenir un solide/gel deshydraté.

Les compositions LI7 et LI8 ont été soumises à distillation préalablement à la lyophilisation afin d'éliminer par évaporation l'éthanol résiduel et l'azéotrope eau/éthanol issus des réactions des monomères, et de l'eau a ensuite été ajoutée afin d'obtenir la même quantité d'extrait sec final.

Les poudres obtenues ont été stockées pendant 5 jours à température ambiante et pression atmosphérique.

La composition des liants LI7 et LI8 est donnée dans le tableau suivant (% massiques introduites par rapport au poids total initial) :

**Tableau 8**

| | LI7 | LI8 |
|---|---|---|
| Glycidoxypropyltriéthoxysilane | 28 | 28 |
| Tétra Ethoxytitanate | 9,5 | 9,5 |
| orthosilicate de tétraéthyle | 1,5 | 1,5 |
| dipropylène-glycol | 5,4 | 12,0 |
| Eau | 55,6 | 49,0 |

Dans LI7 ou LI8, le ratio molaire Ti/Si est de 28/72. Avant lyophilisation, le taux d'extrait sec est de 22 % en poids.

Le solide mou issu du liant LI8 durcit dans le temps. Il a été ensuite réhydraté par ajout d'eau déminéralisée à une température de 40°C à 60°C et sous agitation, de manière à obtenir un liquide (LI'8) au même extrait sec en poids que la composition liquide de départ.

Le solide issu du liant LI7 contenant deux fois moins de dipropylène-glycol, se réhydrate significativement plus lentement, y compris à une température de 40°C à 60°C.

On constate donc que l'ajout de solvant organique lourd à la composition aqueuse initiale comprenant une quantité molaire en titanate plus faible permet de faciliter la réhydratation ultérieure.

### Exemple 4 : Evaporation sous vide d'une matrice liant sol/gel obtenus à partir de précurseurs à base de Si et de Ti

3640g de liant LI7, tel que décrit à l'exemple 3 mais n'ayant pas subi de distillation préalable, ont été évaporés dans un erlenmeyer durant 12h30 sous vide (20 mbars) à une température de bain-marie de 40°C-45°C afin d'obtenir un solide/gel deshydraté.

Le solide mou issu du liant LI7 durcit dans le temps. Il a été ensuite réhydraté après un stockage d'1 jour à température ambiante et pression atmosphérique par ajout d'un mélange eau déminéralisée et de dipropylène-glycol (6,5 % en poids de dipropylène-glycol par rapport au poids total du mélange eau déminéralisée / dipropylène-glycol) en 7 jours à 20°C, de manière à obtenir un liquide au même extrait sec en poids que la composition liquide de départ. Le liant ainsi obtenu de composition identique à LI'8 est dénommé LI"8.

Après réhydratation, le spectre GPC du liant LI"8 est équivalent à celui du liant LI8 : les masses moléculaires sont stabilisées.

Les liants LI8, LI"8 sont utilisés pour réaliser des bains en ajoutant 28,4 % en poids de zinc sec et 1,87 % en poids d'Alu Chromal VIII^{®} poudre commercialisée par Eckart Werke, par rapport au poids total du bain, des additifs et de l'eau en tant que solvant. Les extraits secs des bains B3 et B'3 sont respectivement de 41.6 et 41.3%.

La stabilité des bains après un mois de stockage à 20°C est équivalente, que le liant utilisé soit un liant initial (LI8) ou un liant obtenu par le procédé selon l'invention (LI"8).

Les liants LI8 et LI"8 ont été utilisés pour la préparation de revêtement anticorrosion, respectivement CR8 et CR"8. La composition de revêtement anticorrosion (film sec) est donnée dans le tableau suivant (% massiques théoriques* par rapport au poids total) :

**Tableau 9**

| | CR8 | CR"8 |
|---|---|---|
| Liant L8 | 26,2 | 0 |
| Liant L"8 | 0 | 26,2 |
| Zn | 61,6 | 61,6 |
| AI | 3,3 | 3,3 |
| Additifs | 8,9 | 8,9 |

| | | |
|---|---|---|
| ** les pourcentages massiques donnés dans ce tableau 9 correspondent aux pourcentages massiques calculés en considérant que l'extrait sec du liant est de 22% massique et que seuls les additifs non volatils sont comptés.* | | |

Les performances de tenue au brouillard salin obtenues sont voisines, tel que cela ressort du tableau suivant :

**Tableau 10**

| | CR8 | CR"8 |
|---|---|---|
| Panneau | | |
| poids de revêtement (g/m²) | 27,4 | 27,7 |
| Tenue au brouillard salin (heures) à t=0 Note 10 | 1392 | 792 |

| Vis | | |
|---|---|---|
| poids de revêtement (g/m²) | 23,6 | 25,4 |
| AS IS | 1512 | 1224 |
| CTV (chocs mécaniques) | 1056 | 1344 |
| Cth (Choc thermique : 96h à 180°C) | 1512 | 1512 |
| CTV+Cth (chocs mécaniques et choc thermique) | 1176 | 624 |

### Exemple 5 : Evaporation sous vide d'une matrice liant sol/gel obtenus à partir de précurseurs à base de Si et de Ti, enrichi en Ti

1 à 2 kg de liant LI3 ou LI4 ou LI5, tels que décrits à l'exemple 2, ont été évaporés durant environ 2h30 à 4h sous vide (20 mbars) à l'évaporateur rotatif à 100 rpm à une température de bain-marie de 40°C afin d'obtenir un solide pouvant être finement broyé.

Les poudres issues du liant LI3 ou LI4 ou LI5 ou LI6 ont été ensuite facilement réhydratées à une vitesse d'agitation d'environ 300 à 500 tr/min, par ajout d'eau déminéralisée, de manière à obtenir un liquide au même extrait sec en poids que la composition liquide de départ. Les liants ainsi obtenus sont respectivement dénommés LI"3, LI"4, LI"5, LI"6.

Après réhydratation, les spectres GPC des liants LI"3, LI"4, LI"5, LI"6 sont équivalents à ceux des liants LI3, LI4, LI5, LI6 : les masses moléculaires sont stabilisées.

Les liants LI3, LI4, LI5, LI6, LI"3, LI"4, LI"5, LI"6 sont utilisés pour réaliser des bains, de composition identique à celle donnée à l'exemple 1, les liants LI2 ou LI'2 étant remplacés par les liants de cet exemple.

La stabilité des bains après un mois de stockage à 20°C est équivalente, que le liant utilisé soit un liant initial (LI3, LI4, LI5) ou un liant obtenu par le procédé selon l'invention (LI"3, LI"4, LI"5). Les bains réalisés à partir du liant LI6 ne sont pas stables alors qu'ils sont stables lorsque le liant est LI"6

Les liants LI4, Ll"4, LI"6 ont été utilisés pour la préparation de compositions de revêtement anticorrosion, respectivement CR4, CR"4, CR"6, de composition identique à celle donnée à l'exemple 1, les liants LI2 ou LI'2 étant remplacés par les liants de cet exemple.

Les performances de tenue au brouillard salin obtenues sont données dans le tableau suivant :

**Tableau 11**

| | CR4 | CR"4 | CR"6 |
|---|---|---|---|
| Épaisseur de revêtement (µm) | 9,6 | 9,9 | 9,6 |
| Tenue au brouillard salin (heures) à t=1 mois, 20°C Note 10/9 | 120/336 | 120/624 | 624/1056 |

## Revendications

1. Composition solide, réhydratable à l'eau destinée à la préparation d'une composition aqueuse comprenant un liant à base de silane et de titanate et/ou de zirconate, ladite composition solide étant à base d'un précurseur de titanate et/ou d'un précurseur de zirconate et d'un silane portant au moins une fonction hydrolysable en fonction hydroxyle avec un ratio molaire Ti/Si allant de 10/90 à 60/40 ladite composition étant sous une forme pulvérulente, la taille de particules variant d'environ 2 µm à environ 3 mm.

2. Composition solide selon la revendication 1, dans laquelle le ratio molaire Ti/Si varie de 10/90 à 60/40, avantageusement de 20/80 à 50/50, plus avantageusement de 25/75 à 50/50.

3. Composition solide selon l'une quelconque des revendications précédentes, dans laquelle le précurseur de titanate est un titanate organique avantageusement choisi parmi les tétraalkyle en C1-C8 titanates, et le précurseur de zirconate est un zirconate organique avantageusement choisi parmi les tétraalkyle en C1-C8 zirconates.

4. Composition solide selon l'une quelconque des revendications précédentes, dans laquelle le silane porte en outre une fonction époxy.

5. Composition solide selon la revendication précédente, dans laquelle le silane est choisi parmi le di- ou triméthoxysilane à fonction époxy et le di- ou triéthoxysilane à fonction époxy, ainsi que leurs mélanges, en particulier comme le bêta-(3,4-époxycyclohexyl)éthyl- triméthoxysilane, le 4-(triméthoxysilyl)butane-1,2-époxyde, le gamma-glycidoxypropyltriméthoxysilane, le gamma glycidoxypropyltriéthoxysilane, l'octyltriethoxysilane, le phenyltriethoxysilane, le methyltriethoxysilane, (2-diethylphosphatoethyl) triethoxy silane, le vinyltriethoxysilane, le 3-aminopropyltriethoxysilane, le methylmethacrylate trimethoxysilane, le méthylmethacrylate triethoxysilane et leurs mélanges.

6. Composition solide selon l'une quelconque des revendications précédentes, à base en outre d'un silicate, avantageusement d'un alcoxyde de silicium, en particulier de l'orthosilicate de tétraéthyle.

7. Composition solide selon l'une quelconque des revendications précédentes, obtenue par déshydratation d'une composition aqueuse dans laquelle on a introduit ledit précurseur de titanate et/ou de zirconate, ledit silane, éventuellement ledit silicate, et de l'eau.

8. Composition solide selon la revendication précédente, obtenue par déshydratation de ladite composition aqueuse comprenant au moins 25% en poids, par rapport au poids total de ladite composition aqueuse, d'eau, avantageusement au moins 32% en poids d'eau.

9. Composition solide selon l'une quelconque des revendications 7 à 8, obtenue par déshydratation de ladite composition aqueuse comprenant en outre un solvant organique lourd, un liquide ionique, ou leurs mélanges.

10. Composition solide selon la revendication précédente, obtenue par déshydratation de ladite composition aqueuse comprenant de 0,5 à 15% en poids, par rapport au poids total de ladite composition aqueuse, de solvant organique lourd, de solvant ionique, ou de leurs mélanges.

11. Procédé de préparation d'une composition solide selon l'une quelconque des revendications précédentes, comprenant une étape de déshydratation d'une composition aqueuse comprenant ledit précurseur de titanate et/ou de zirconate, ledit silane, éventuellement ledit silicate, et de l'eau, telle que définie à l'une quelconque des revendications 7 à 10.

12. Procédé selon la revendication précédente, caractérisé en ce la déshydratation est conduite par lyophilisation, zéodratation, évaporation sous vide ou atomisation.

13. Procédé de préparation d'une composition aqueuse comprenant un liant à base de silane et de titanate et/ou de zirconate comprenant une étape d'hydratation d'une composition solide selon l'une quelconque des revendications 1 à 10 ou obtenue par le procédé selon l'une quelconque des revendications 11 ou 12.

## Patentansprüche

1. In Wasser rehydrierbare Zusammensetzung in fester Form, die zum Herstellen einer wässrigen Zusammensetzung bestimmt ist, die ein Bindemittel auf Basis von Silan und Titanat und/oder Zirkonat umfasst, wobei die feste Zusammensetzung auf einem Titanatvorläufer und/oder einem Zirkonatvorläufer und einem Silan basiert, das mindestens eine Funktion trägt, die zu einer Hydroxylfunktion hydrolysierbar ist, mit einem Molverhältnis Ti/Si von 10:90 bis 60:40, wobei die Zusammensetzung in Pulverform vorliegt, wobei die Teilchengröße von etwa 2 µm bis etwa 3 mm variiert.

2. Zusammensetzung in fester Form nach Anspruch 1, wobei das Molverhältnis Ti/Si von 10:90 bis 60:40, vorteilhafterweise von 20:80 bis 50:50, noch vorteilhafter von 25:75 bis 50:50 variiert.

3. Zusammensetzung in fester Form nach einem der vorstehenden Ansprüche, wobei der Titanatvorläufer ein organisches Titanat ist, das vorteilhafterweise aus C₁-C₈-Tetraalkyltitanaten ausgewählt ist, und der Zirkonatvorläufer ein organisches Zirkonat ist, das vorteilhafterweise aus den C₁-C₈-Tetraalkylzirkonaten ausgewählt ist.

4. Zusammensetzung in fester Form nach einem der vorstehenden Ansprüche, wobei das Silan außerdem eine Epoxidfunktion trägt.

5. Zusammensetzung in fester Form nach dem vorstehenden Anspruch, wobei das Silan ausgewählt ist aus epoxyfunktionellem Di- oder Trimethoxysilan und epoxyfunktionellem Di- oder Triethoxysilan sowie aus deren Mischungen, insbesondere als beta-(3,4-Epoxycyclohexyl)ethyl-trimethoxysilan, 4-(Trimethoxysilyl)butan-1,2-epoxyd, gamma-Glycidoxypropyltrimethoxysilan, gamma-Glycidoxypropyltriethoxysilan, Octyltriethoxysilan, Phenyltriethoxysilan, Methyltriethoxysilan, (2-Diethylphosphatoethyl)triethoxysilan, Vinyltriethoxysilan, 3-Aminopropyltriethoxysilan, Methylmethacrylat-trimethoxysilan, Methylmethacrylattriethoxysilan und deren Mischungen.

6. Zusammensetzung in fester Form nach einem der vorstehenden Ansprüche, außerdem auf Basis eines Silikats, vorteilhafterweise eines Siliziumalkoxids, insbesondere Tetraethylorthosilikat.

7. Zusammensetzung in fester Form nach einem der vorstehenden Ansprüche, die durch Dehydratisierung einer wässrigen Zusammensetzung erhalten wird, in die der Titanat- und/oder Zirkonatvorläufer, das Silan, möglicherweise das Silikat und Wasser eingebracht wurden.

8. Zusammensetzung in fester Form nach dem vorstehenden Anspruch, die durch Dehydratisierung der wässrigen Zusammensetzung erhalten wird, die mindestens 25 Gew.-% bezogen auf das Gesamtgewicht der wässrigen Zusammensetzung, Wasser, vorteilhafterweise mindestens 32 Gew.-% Wasser umfasst.

9. Zusammensetzung in fester Form nach einem der Ansprüche 7 bis 8, die durch Dehydratisierung der wässrigen Zusammensetzung erhalten wird, die außerdem ein schweres organisches Lösungsmittel, eine ionische Flüssigkeit oder deren Mischungen umfasst.

10. Zusammensetzung in fester Form nach dem vorstehenden Anspruch, die durch Dehydratisierung der wässrigen Zusammensetzung erhalten wird, die 0,5 bis 15 Gew.-% bezogen auf das Gesamtgewicht der wässrigen Zusammensetzung, schweres organisches Lösungsmittel, ionisches Lösungsmittel oder deren Mischungen umfasst.

11. Herstellungsverfahren einer festen Zusammensetzung nach einem der vorstehenden Ansprüche, das einen Dehydratisierungsschritt einer wässrigen Zusammensetzung umfasst, die den Titanat- oder Zirkonatvorläufer, das Silan, möglicherweise das Silikat und Wasser, wie in einem der Ansprüche 7 bis 10 definiert, umfasst.

12. Verfahren nach dem vorstehenden Anspruch, **dadurch gekennzeichnet, dass** die Dehydratisierung durch Gefriertrocknung, Zeodratation, Vakuumverdampfung oder Verdüsung durchgeführt wird.

13. Herstellungsverfahren einer wässrigen Zusammensetzung, die ein Bindemittel auf Basis von Silan und Titanat- und/oder Zirkonat umfasst, das einen Hydratisierungsschritt einer festen Zusammensetzung nach einem der Ansprüche 1 bis 10 oder die durch das Verfahren nach einem der Ansprüche 11 oder 12 erhalten wird, umfasst.

## Claims

1. A water-hydratable solid composition, intended for the preparation of an aqueous composition comprising a binder based on silane and titanate and/or zirconate, said solid composition being based on a titanate precursor and/or a zirconate precursor and a silane carrying at least one function hydrolyzable to a hydroxyl function with a Ti/Si molar ratio ranging from 10/90 to 60/40, said solid composition being in powdered form, with a particle size ranging from about 2 µm to about 3 mm.

2. The solid composition according to claim 1, wherein the Ti/Si molar ratio varies from 10/90 to 60/40, advantageously from 20/80 to 50/50, more advantageously from 25/75 to 50/50.

3. The solid composition according to any one of the preceding claims, wherein the titanate precursor is an organic titanate advantageously selected from C₁-C₈ tetraalkyl titanates, and the zirconate precursor is an organic zirconate advantageously selected from C₁-C₈ tetraalkyl zirconates.

4. The solid composition according to any one of the preceding claims, wherein the silane additionally carries an epoxy function.

5. The solid composition according to the preceding claim, wherein the silane is selected from epoxy-functional di- or trimethoxysilane and epoxy-functional di- or triethoxysilane, as well as mixtures thereof, in particular such as beta-(3,4-epoxycyclohexyl)ethyl-trimethoxysilane, 4-(trimethoxysilyl)butane-1,2-epoxide, gamma-glycidoxypropyltrimethoxysilane, gamma-glycidoxypropyltriethoxysilane, octyltriethoxysilane, phenyltriethoxysilane, methyltriethoxysilane, (2-diethylphosphatoethyl) triethoxy silane, vinyltriethoxysilane, 3-aminopropyltriethoxysilane, methyl methacrylate trimethoxysilane, methyl methacrylate triethoxysilane and mixtures thereof.

6. The solid composition according to any one of the preceding claims, further based on a silicate, advantageously a silicon alkoxide, in particular tetraethyl orthosilicate.

7. The solid composition according to any one of the preceding claims, obtained by dehydration of an aqueous composition into which said titanate and/or zirconate precursor, said silane, optionally said silicate, and water have been introduced.

8. The solid composition according to the preceding claim, obtained by dehydration of said aqueous composition comprising at least 25% by weight of water, based on the total weight of said aqueous composition, advantageously at least 32% by weight of water.

9. The solid composition according to any one of claims 7 to 8, obtained by dehydration of said aqueous composition further comprising a heavy organic solvent, an ionic liquid, or mixtures thereof.

10. The solid composition according to the preceding claim, obtained by dehydration of said aqueous composition comprising from 0.5 to 15% by weight of heavy organic solvent, ionic solvent, or mixtures thereof, based on the total weight of said aqueous composition.

11. A process for preparing a solid composition according to any one of the preceding claims, comprising a step of dehydrating an aqueous composition comprising said titanate and/or zirconate precursor, said silane, optionally said silicate, and water, as defined in any one of claims 7 to 10.

12. Process according to the preceding claim, **characterized in that** the dehydration is carried out by freeze-drying, zeodration, vacuum evaporation, spray drying.

13. A process for preparing an aqueous composition comprising a silane and titanate and/or zirconate binder comprising a step of hydrating a solid composition according to any one of claims 1 to 10 or obtained by the process according to any one of claims 11 and 12.
